# EUROPÄISCHE PATENTSCHRIFT

(11) **EP 1 084 351 B1**
(45) Veröffentlichungstag und Bekanntmachung des Hinweises auf die Patenterteilung: **18.09.2002**
(21) Anmeldenummer: 99923561.7
(22) Anmeldetag: 08.05.1999
(51) Int. Cl.: F16C 39/06

(54) **MAGNETLAGERZELLE**
MAGNETIC BEARING CELL
CELLULE DE PALIER MAGNETIQUE

(30) Priorität: 10.06.1998 DE 19825854
(43) Veröffentlichungstag der Anmeldung: 21.03.2001
(73) Patentinhaber: Leybold Vakuum GmbH, 50968 Köln (DE)
(72) Erfinder: REIMER, Peter, Santa Clara, CA 95051 (US)
(74) Vertreter: Leineweber, Jürgen, Dipl.-Phys.
(86) Internationale Anmeldenummer: EP9903169
(87) Internationale Veröffentlichungsnummer: WO99064753

(56) Entgegenhaltungen:
- EP-A- 0 332 979
- DE-A- 3 409 047
- DE-A- 4 020 726
- DE-A- 4 106 063
- DE-A- 4 301 076

## Beschreibung

Die Erfindung bezieht sich auf eine Magnetlagerzelle mit rotierenden Lagerteilen, die mindestens zwei auf einer Welle befestigte Scheiben mit jeweils einem Permanentmagnetring umfassen, sowie mit ortsfesten Lagerteilen, die in den oder die Spalten zwischen den rotierenden Scheiben hineinragende Ringscheiben, Polbauteile und für eine aktive Axialregelung ein von einem Sensor gesteuertes Spulensystem umfassen.

Magnetlagerzellen dieser Art sind aus den deutschen Offenlegungsschriften 34 09 047 und 41 06 063 bekannt. Das der aktiven Axialregelung dienende Spulensystem umfasst zwei Ringspulen, die jeweils einer Stirnseite des aus rotierenden und ortsfesten Lagerteilen bestehenden Pakets zugeordnet sind.

Der vorliegenden Erfindung liegt die Aufgabe zugrunde, eine Magnetlagerzelle der eingangs erwähnten Art kompakter und einfacher zu bauen.

Erfindungsgemäß wird diese Aufgabe dadurch gelöst, dass als Spulensystem eine Zylinderspule vorgesehen ist, die das aus rotierenden und feststehenden Scheiben bestehende Ringpaket umgibt und deren Länge der Höhe dieses Ringpaketes im wesentlichen entspricht. Dadurch, dass zwei stirnseitig angeordnete Ringspulen entfallen, reduziert sich wesentlich die axiale Baulänge der erfindungsgemäßen Magnetlagerzelle. Das Wickeln und Montieren nur einer Zylinderspule ist einfacher als das Wickeln und Montieren von zwei Ringspulen.

Zweckmäßig ist ein Rohrabschnitt aus einem Werkstoff mit kleiner Permeabilität Bestandteil der Zylinderspule. Dieser Rohrabschnitt bildet den Stützkörper für die Wicklung der Spule. Weiterhin kann der Rohrabschnitt zur vakuumdichten Abdichtung des Lagerraumes gegenüber der umgebenden Atmosphäre herangezogen werden. Beim Stand der Technik sind dazu aufwendige Schweißarbeiten erforderlich, um das notwendigerweise zweiteilig ausgebildete äußere Polbauteil im Bereich der Trennebene vakuumdicht gestalten zu können.

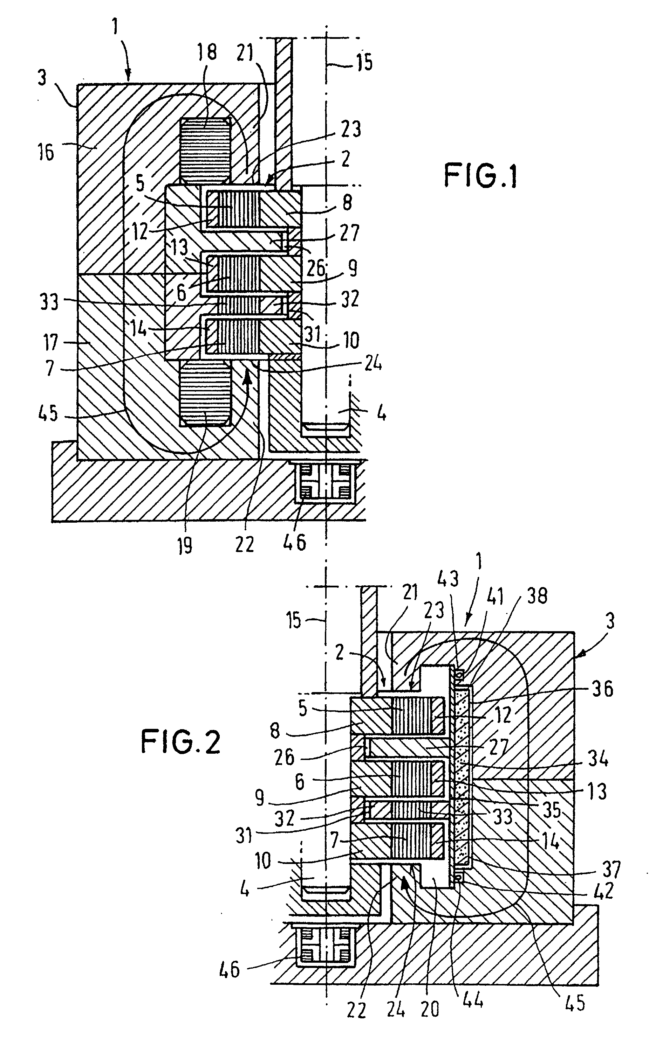

Weitere Vorteile und Einzelheiten der Erfindung sollen anhand von in den Figuren 1 und 2 dargestellten Ausführungen erläutert werden. Es zeigen
- Figur 1 eine Lösung nach dem Stand der Technik, bekannt aus der DE-A-41 06 063 und
- Figur 2 ein Ausführungsbeispiel für die erfindungsgemäße Lösung.

Die in beiden Figuren jeweils dargestellte Magnetlagerzelle 1 umfasst jeweils den Rotor 2 und den Stator 3.

Bestandteile der Rotoren 2 sind die Welle 4 und die auf der Welle 4 befestigten Permanentmagnetringe 5, 6 und 7. Zur Befestigung der Permanentmagnetringe 5 bis 7 auf der Welle 4 sind innere Nabenringe 8, 9 und 10 sowie äußere Armierungsringe 12, 13 und 14 vorgesehen, die beispielsweise miteinander verklebt sind.

Der Stator 3 der Magnetlagerzellen 1 umfasst jeweils rotationssymmetrisch zur zentralen Achse 15 gestaltete Polbauteile (Jochbauteile) 16, 17, deren gemeinsamer Querschnitt im wesentlichen C-förmig ist und die den Innenraum 20 bilden. Die inneren Abschnitte 21, 22 bilden den Permanentmagnetringen 5, 7 des Rotors 2 zugewandte Polflächen 23, 24.

In den Spalt 26 zwischen den Permanentmagnetringen 5 und 6 greift eine feststehende Ringscheibe 27 ein, die aus nicht magnetisierbarem Material hoher elektrischer Leitfähigkeit, beispielsweise Kupfer, besteht. Bei im wesentlichen axial gerichteten Relativbewegungen werden in der Ringscheibe 27 Wirbelströme erzeugt, die die gewünschte dämpfende Wirkung haben.

In den Spalt 31 zwischen den Permanentmagnetringen 6 und 7 ragt eine ortsfeste Ringscheibe 32 hinein, die einen Permanentmagnetring 33 trägt. Die radialen Abmessungen dieses Stator-Permanentmagnetringes 33 entsprechen den Abmessungen der Rotor-Permanentmagnetringe 6 und 7. Im übrigen besteht die Scheibe 32 aus nicht magnetisierbarem Material. Hat das Material zusätzlich eine hohe elektrische Leitfähigkeit, dann trägt es zur Verbesserung der Dämpfungseigenschaften bei.

Bei der Magnetlagerzelle nach dem Stand der Technik (Figur 1) sind zwei Ringspulen 18, 19 vorgesehen, die jeweils einer Stirnseite des aus rotierenden und festen Ringscheiben bestehenden Pakets zugeordnet sind. Dadurch ergibt sich eine relativ große axiale Baulänge.

Bei der Lösung nach der Erfindung (Figur 2) ist anstelle der beiden Ringspulen 18, 19 nur eine Zylinderspule 34 vorhanden. Sie umgibt das aus rotierenden und feststehenden Ringscheiben bestehende Lagerpaket und hat eine Länge, die in etwa der Höhe dieses Paketes entspricht. Sie ist von außen auf den Rohrabschnitt 35 gewickelt, der aus einem Werkstoff mit kleiner Permeabilität (CFK, Torlon) besteht. Die Jochhälften 16, 17 sind mit geeigneten Aussparungen 36, 37 ausgerüstet, die insgesamt einen zylindrischen Ringraum 38 bilden und der Aufnahme der Wicklung der Spule 34 dienen. Die Länge des Rohrabschnittes 35 ist größer als die Länge des Ringraumes 38. Dadurch liegen die Enden des Rohrabschnittes 35 den Innenwandungen der Jochbauteile 16, 17 unmittelbar auf. In diesen Bereichen sind Ringnuten 41, 42 mit geeigneten Dichtungsringen 43, 44 vorgesehen. Sie ermöglichen eine vakuumdichte Trennung des Innenraums der Magnetlagerzelle 1 gegenüber seiner umgebenden Atmosphäre, da der Rohrabschnitt 35 den O-Ringen 43, 44 dicht anliegt. Im übrigen zentriert der Rohrabschnitt 35 die Ringscheiben 27 und 32. Diese können mit dem Rohrabschnitt 35 verklebt sein oder von axialen Distanzringen (nicht dargestellt) in ihrer Lage gehalten werden.

Die Magnete 5, 6, 33, 7 sind derart in axialer Richtung magnetisiert, dass sie einander anziehende Kräfte ausüben. Zusammen mit den Polbauteilen 16 (21) und 17 (22) bilden sie einen Magnetkreis (Pfeile 45), der die Ringspulen 18, 19 bzw. die Zylinderspule 34 einschließt und die zentrale Achse 15 torrodial umgibt. Mit Hilfe der Spulen, eines Axialsensors 46 und eines nicht dargestellten Reglers erfolgt in bekannter Weise die aktive Axialregelung. Die Abstände zwischen den Permanentmagneten 6 und 33 bzw. 33 und 7 können klein gehalten werden, so dass sich eine hohe Radialsteifigkeit ergibt.

## Patentansprüche

1. Magnetlagerzelle (1) mit rotierenden Lagerteilen, die mindestens zwei auf einer Welle (4) befestigte Scheiben (8-10, 12-14) mit jeweils einem Permanentmagnetring (5, 6, 7) umfassen, sowie mit ortsfesten Lagerteilen, die in den oder die Spalten (26, 31) zwischen den rotierenden Scheiben hineinragende Ringscheiben (27, 32), Polbauteile (16, 17) und für eine aktive Axialregelung ein von einen Sensor (36) gesteuertes Spulensystem (34) umfassen, **dadurch gekennzeichnet, dass** als Spulensystem eine Zylinderspule (34) vorgesehen ist, die das aus rotierenden und feststehenden Scheiben bestehende Ringscheibenpaket umgibt und deren Länge der Höhe dieses Paketes im wesentlichen entspricht.

2. Magnetlagerzelle nach Anspruch 1, **dadurch gekennzeichnet, dass** zwei rotationssymmetrisch zur Wellenachse (15) gestaltete Polbauteile (16, 17) vorgesehen sind, deren gemeinsamer Querschnitt im wesentlichen C-förmig ist, und dass sich die Zylinderspule (34) innerhalb des von den Polbauteilen gebildeten Raumes (20) befindet.

3. Magnetlagerzelle nach Anspruch 1 oder 2, **dadurch gekennzeichnet, dass** die Zylinderspule (34) mit einem Rohrabschnitt (35) aus einem Werkstoff mit kleiner Permeabilität ausgerüstet ist, der den Stützkörper für die Wicklung der Spule bildet.

4. Magnetlagerzelle nach Anspruch 3, **dadurch gekennzeichnet, dass** die innere Wandung der C-förmig zusammengefügten Polbauteile (16, 17) eine zylindrische Aussparung (38) für die Spule (34) aufweist und dass beide über die Länge der Spule hinausragenden Enden des Rohrabschnittes (35) mit den axialen Rändern der Aussparung (38) eine Vakuumabdichtung (41, 42; 43, 44) bilden.

## Claims

1. Magnet bearing cell (1) having rotating bearing parts, which comprise at least two disks (8-10, 12-14) fastened on a shaft (4) and having in each case a permanent-magnet ring (5, 6, 7), as well as having stationary bearing parts, which comprise annular disks (27, 32) projecting into the gap or gaps (26, 31) between the rotating disks, pole components (16, 17) and for active axial control a coil system (34) controlled by a sensor (36), **characterized in that** as a coil system a cylindrical coil (34) is provided, which surrounds the annular disk stack composed of rotating and stationary disks and the length of which substantially corresponds to the height of said stack.

2. Magnet bearing cell according to claim 1, **characterized in that** two pole components (16, 17) fashioned in a rotationally symmetrical manner relative to the shaft axis (15) are provided, the joint cross section of which is substantially C-shaped, and that the cylindrical coil (34) is situated inside the space (20) formed by the pole components.

3. Magnet bearing cell according to claim 1 or 2, **characterized in that** the cylindrical coil (34) is equipped with a tubular portion (35) made of a material of low permeability, which forms the supporting body for the winding of the coil.

4. Magnet bearing cell according to claim 3, **characterized in that** the inner wall of the pole components (16, 17) assembled in a C-shaped manner has a cylindrical recess (38) for the coil (34) and that both ends of the tubular portion (35), which project beyond the length of the coil, together with the axial edges of the recess (38) form a vacuum seal (41, 42; 43, 44).

## Revendications

1. Cellule de palier magnétique (1) comportant des parties de palier rotatives qui comprennent au moins deux disques (8 à 10, 12 à 14) fixés sur un arbre (4) avec chacun un anneau magnétique permanent (5, 6, 7) ainsi que des parties de palier stationnaires qui comprennent des disques annulaires (27, 32) faisant saillie dans le ou les entrefers (26, 31) entre les disques rotatifs, des composants polaires (16, 17) et un système de bobine (34) commandé par un capteur (36) pour un réglage axial actif, **caractérisé en ce qu'**il est prévu en tant que système de bobine une bobine cylindrique (34) qui entoure l'empilement de disques annulaires constitué par les disques rotatifs et stationnaires et dont la longueur correspond sensiblement à la hauteur de cet empilement.

2. Cellule de palier magnétique selon la revendication 1, **caractérisé en ce qu'**il est prévu deux composants polaires (16, 17) réalisés à symétrie de révolution par rapport à l'axe de l'arbre (15), dont la section transversale commune est sensiblement en forme de C, et **en ce que** la bobine cylindrique (34) se trouve à l'intérieur de l'espace (20) formé par les composants polaires.

3. Cellule de palier magnétique selon l'une ou l'autre des revendications 1 et 2, **caractérisé en ce que** la bobine cylindrique (34) est équipée d'un tronçon de tube (35) en un matériau à faible perméabilité qui forme le corps de soutien pour l'enroulement de la bobine.

4. Cellule de palier magnétique selon la revendication 3, **caractérisé en ce que** la paroi intérieure des composants polaires (16, 17) assemblés en forme de C présente un évidement (38) cylindrique pour la bobine (34) et **en ce que** les deux extrémités du tronçon de tube (35) dépassant au-delà de la longueur de la bobine forment un étanchement au vide (41, 42 ; 43, 44) avec les bords axiaux de l'évidement (38).
